# FASCICULE DE BREVET EUROPEEN

(11) **EP 3 755 894 B1**
(45) Date de publication et mention de la délivrance du brevet: **19.04.2023**
(21) Numéro de dépôt: 19712258.3
(22) Date de dépôt: 18.02.2019
(51) Int. Cl.: F02C 7/32, F02C 7/36

(54) **ASSEMBLAGE DE MAINTIEN D'UN TRAIN D'ENGRENAGES DANS UNE TURBOMACHINE**
ANORDNUNG ZUM HALTEN EINES GETRIEBES IN EINER TURBOMASCHINE
ASSEMBLY FOR RETAINING A GEAR TRAIN IN A TURBOMACHINE

(30) Priorité: 19.02.2018 FR 1851411
(43) Date de publication de la demande: 30.12.2020
(73) Titulaire: SAFRAN AIRCRAFT ENGINES, 75015 Paris (FR)
(72) Inventeur: JACQUEMARD, Christophe, Paul, 77550 MOISSY-CRAMAYEL (FR); DESOMBRE, Didier, Gabriel, Bertrand, 77550 MOISSY-CRAMAYEL (FR); MARLIN, François, Marie, Paul, 77550 MOISSY-CRAMAYEL (FR)
(74) Mandataire: Ernest Gutmann - Yves Plasseraud S.A.S.
(86) Numéro de dépôt international: PCT/FR2019/050364
(87) Numéro de publication internationale: WO 2019/158883

(56) Documents cités:
- WO-A1-2013/130373
- US-A- 5 433 674
- US-A1- 2013 195 604
- US-A1- 2017 122 426

## Description

### DOMAINE

La présente invention concerne des dispositifs de maintien d'un réducteur dans une turbomachine ainsi que celui des trains d'engrenages à configuration épicycloïdale.

### CONTEXTE

Classiquement un train d'engrenages épicycloïdal comprend des pignons satellites en prise avec une couronne externe ou planétaire externe et un pignon central ou planétaire interne. Les pignons satellites sont portés par un porte-satellite et montés libre en rotation sur des pivots. Un tel train d'engrenages épicycloïdal peut servir notamment à la transmission de puissance d'un arbre moteur, tel que l'arbre d'un compresseur basse pression, à une roue de soufflante par l'intermédiaire d'un pignon central porté par l'arbre. Dans une configuration de fonctionnement possible, le porte-satellites est fixe en rotation et le pignon central et la couronne externe sont menant et mené, respectivement. Ce montage est couramment appelé réducteur planétaire. Avec un tel agencement, il est par exemple possible, dans une turbomachine, d'entrainer la roue de soufflante reliée à la couronne par l'intermédiaire de l'arbre du compresseur basse pression.

Toutefois, l'intégration d'un réducteur dans une turbomachine pose plusieurs difficultés. En premier lieu, la liaison du réducteur, c'est-à-dire du porte-satellites, au carter doit être réalisée avec une certaine souplesse pour limiter les perturbations au sein du réducteur, c'est-à-dire limiter la détérioration prématurée des dentures, et aussi filtrer toutes les vibrations se propageant dans la chaîne de transmission par exemple. En second lieu, un couple important doit pouvoir être repris par le carter dans les conditions normales mais également en conditions extrêmes de fonctionnement. Les deux points précités apparaissent ainsi clairement antinomiques et relèvent donc généralement d'un compromis dans l'architecture de montage du réducteur. Pourtant, ces deux fonctions permettent d'assurer à la fois un comportement optimum du réducteur mais également une tenue mécanique satisfaisante de la liaison du réducteur avec le carter. En troisième lieu, il est nécessaire que l'architecture retenue permette une bonne accessibilité pour assurer le montage et la maintenance du réducteur dans son environnement.

De manière générale, le respect des contraintes exposées au paragraphe précédent impose des aménagements de formes de rayon et d'épaisseur des parois du carter qui augmentent son encombrement. Dans des cas complexes, l'intégration du réducteur peut rendre difficile son montage et/ou démontage.

L'invention exposée ci-après propose une solution permettant de résoudre les problèmes précités tout en étant simple et économique à mettre en oeuvre.

### RESUME DE L'INVENTION

Selon la revendication 1, la présente invention concerne tout d'abord un assemblage de maintien d'un train d'engrenages épicycloïdal dans une turbomachine comprenant un carter annulaire dans lequel sont engagés une première pièce annulaire et une seconde pièce annulaire bloquées en rotation dans le carter par des premiers moyens de crabotage annulaire et des seconds moyens de crabotage annulaire, respectivement, dans lequel
- les premiers moyens de crabotage annulaire sont configurés pour autoriser un premier jeu circonférentiel entre la première pièce annulaire et le carter ;
- les seconds moyens de crabotage annulaire sont configurés pour autoriser un second jeu circonférentiel entre la seconde pièce annulaire et le carter ;
- le premier jeu circonférentiel est inférieur strictement au second jeu circonférentiel.

Selon l'invention, deux pièces annulaires distinctes sont utilisées pour réaliser la jonction du carter à un train d'engrenages épicycloïdal tel qu'un réducteur, plus particulièrement pour réaliser la jonction du carter au porte-satellites dans le cadre d'une configuration dite réducteur planétaire. Chacune de la première pièce annulaire et de la seconde pièce annulaire permettent la reprise d'efforts résultant du fonctionnement du train d'engrenages. Dans un cas normal de fonctionnement, la première pièce annulaire assure le passage du couple du fait d'un premier jeu circonférentiel inférieur au second jeu circonférentiel. Lorsque le couple dépasse une certaine limite, la seconde pièce permet de faire transiter les efforts. La seconde pièce pourra ainsi être conçue et dimensionnée pour reprendre les couples supérieurs à cette valeur limite. Ce schéma spécifique pour le passage de couple est rendu possible par une liaison dédiée de chacune de la première pièce annulaire et de la seconde pièce annulaire au carter et par le dimensionnement des jeux circonférentiels comme précité.

On comprend également que l'utilisation de moyens de crabotage facilite le montage de la première et de la seconde pièce dans le carter annulaire par rapport à des liaisons boulonnées comme dans la technique antérieure.

Spécifiquement, on pourra dimensionner les premiers moyens de crabotage de manière à ce que le premier jeu circonférentiel soit compris entre 0 et 0,2 mm et de préférence inférieur à 0,1 mm. Les seconds moyens de crabotage pourront être dimensionnés de manière à ce que le second jeu circonférentiel soit compris entre 0,5 et 2 mm.

De préférence, la première pièce annulaire présente une rigidité axiale et une rigidité circonférentielle inférieures, respectivement, à la rigidité axiale et la rigidité circonférentielle de la seconde pièce annulaire. De cette manière, lorsque le couple dépasse une valeur seuil, la seconde pièce annulaire peut plus aisément reprendre ledit couple et le diriger vers le carter.

Lorsque la première pièce et la seconde pièce sont reliées au porte-satellites d'un train d'engrenages à configuration épicycloïdale, la première pièce présente alors une souplesse radiale suffisante pour limiter les surcharges de couples transmises par le train d'engrenages au porte-satellites. La deuxième pièce présente quant à elle une raideur suffisante pour supporter les excès ponctuels de couples.

Dans une réalisation particulière, la première pièce comprend au moins un renflement annulaire qui peut être formé entre les premiers moyens de crabotage et une bride annulaire opposée de fixation à un planétaire externe d'un train d'engrenages épicycloïdal.

Egalement, la première pièce annulaire et la seconde pièce annulaire sont fixées l'une à l'autre par des brides annulaires axialement opposées aux premiers moyens de crabotage et aux seconds moyens de crabotage.

Dans une réalisation particulière de l'invention, les premiers moyens de crabotage circonférentiel comprennent :
- une pluralité de séries de cannelures axiales ou sillons axiaux, lesdites séries étant espacées circonférentiellement et formées sur l'un de la première pièce et du carter, et
- une pluralité de séries de nervures axiales, lesdites séries étant espacées circonférentiellement et formées sur l'autre de la première pièce et du carter annulaire.

On comprend que le terme cannelures désigne des sillons, c'est-à-dire des parties creuses réalisées dans l'une de la première pièce et du carter que le terme nervures vise des parties pleines aptes délimitées circonférentiellement par les parties creuses.

Dans une autre réalisation de l'invention, les premiers moyens de crabotage circonférentiel pourraient comprendre des parties pleines ou dents en saillie radialement vers l'extérieur et régulièrement espacées autour de l'axe de la première pièce, le nombre de dents étant par exemple égal à huit. Elles peuvent avoir une section transverse sensiblement rectangulaire et coopérer avec des parties creuses portées par le carter annulaire.

Dans l'assemblage selon l'invention, la seconde pièce annulaire est intercalée radialement entre la première pièce annulaire et une virole annulaire du carter.

Egalement, l'assemblage peut comprendre une troisième pièce annulaire intercalée annulairement entre la seconde pièce annulaire et le carter et comportant de préférence des bras axiaux fixés par boulonnage sur la première pièce annulaire. Cette troisième pièce annulaire permet le maintien axial du réducteur qui se trouve à l'intérieur de l'assemblage au moyen d'une liaison qui est accessible depuis l'extrémité de l'assemblage portant les moyens de crabotage. Il est ainsi possible d'avoir un montage et un démontage rapide et direct du train d'engrenages par l'avant du moteur sans avoir à démonter d'autres pièces. La fixation de la troisième pièce à la première pièce et non à la seconde pièce permet de maintenir une bonne rigidité à l'assemblage formé de la première pièce, de la seconde pièce et de la troisième pièce du fait que le premier jeu circonférentiel est inférieur strictement au second jeu circonférentiel.

L'invention concerne également un assemblage comprenant un train d'engrenages d'une turbomachine à gaz pour aéronef, comportant un planétaire externe et des pignons satellites en prise avec un planétaire interne et avec le planétaire externe et montés chacun libre en rotation sur un porte-satellites. Les première et seconde pièces annulaires de reprise de couple en situation normale et en situation critiques, sont ainsi assemblées au réducteur par crabotage.

Elle concerne encore une turbomachine à gaz pour aéronef comprenant un train d'engrenages dont le pignon central entoure et est solidaire en rotation d'un arbre (30) du compresseur de la turbomachine.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue schématique en perspective d'une turbomachine selon la technique connue ;
- la figure 2 est une vue schématique en coupe d'un train d'engrenages épicycloïdal destiné à être utilisé dans une turbomachine selon la figure 1 ;
- la figure 3 est une vue schématique en coupe de la partie amont d'une turbomachine à double flux d'un type connu et comprenant un train d'engrenage tel que sur la figure 2 ;
- la figure 3A est une vue schématique en perspective d'un assemblage selon l'invention depuis l'amont ;
- la figure 3B est une vue schématique à plus grande échelle de la zone délimité en pointillés sur la figure 3A ;
- la figure 4A est une vue schématique en perspective d'une première réalisation d'une première pièce annulaire de l'assemblage selon l'invention ;
- la figure 4B est une vue schématique en perspective de la première annulaire de la figure 5A avec un arrachement partiel ;
- la figure 5 est une vue schématique en perspective d'une seconde réalisation de la première pièce annulaire ;
- la figure 6 est une vue schématique en perspective de la seconde pièce annulaire de l'assemblage selon l'invention ;
- la figure 7A est une vue schématique en perspective du montage de la première pièce annulaire selon la première réalisation représentée en figure 4A, engagée dans la seconde pièce annulaire représentée en figure 6 ;
- la figure 7B est une vue schématique en perspective d'un carter annulaire destiné à recevoir les première et seconde pièces annulaires représentées en figure 7A ;
- la figure 8A est une vue schématique en perspective du montage de la première pièce annulaire selon la seconde réalisation représentée en figure 5, engagée dans la seconde pièce annulaire représentée en figure 6 ;
- la figure 8B est une vue schématique en perspective d'un carter annulaire destiné à recevoir les première et seconde pièces annulaires représentées en figure 8A ;
- la figure 9 est une vue à plus grande échelle de la zone délimitée en pointillés sur la figure 8B.
- la figure 10 est une vue schématique en perspective d'un assemblage selon l'invention, vu depuis l'aval, le carter annulaire ayant été retiré afin de mettre en évidence la coopération des première, seconde et troisième pièces annulaires.

### DESCRIPTION DETAILLEE

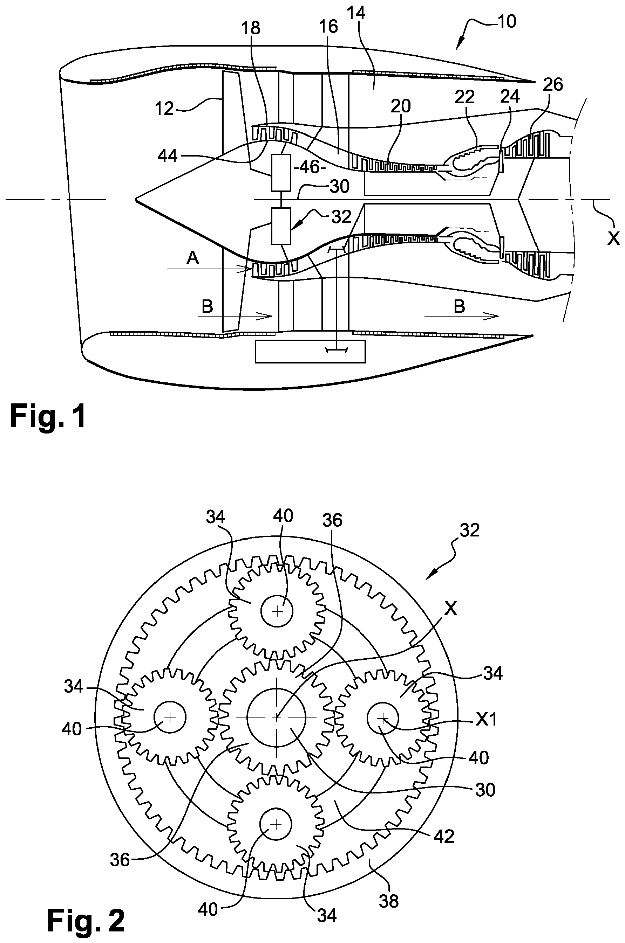

On se réfère tout d'abord à la figure 1 qui représente une vue schématique d'une turbomachine 10 selon la technique connue comprenant d'amont en aval une roue de soufflante 12 dont la rotation induit une accélération d'air dans une veine annulaire d'air secondaire 14 (flux d'air B) entourant successivement une veine annulaire d'air primaire 16 (flux d'air A) s'écoulant dans un compresseur basse pression 18, un compresseur haute pression 20, une chambre annulaire de combustion 22, une turbine haute pression 24 et une turbine basse pression 26. Classiquement, la turbine basse pression 26 entraine en rotation le rotor 30 du compresseur basse pression lequel est relié à la roue de soufflante 12. Toutefois, pour limiter la vitesse de rotation de la roue de soufflante 12 relativement à la vitesse de rotation du rotor 30 du compresseur basse pression 18, il est connu de monter un train d'engrenages épicycloïdal 32 radialement à l'intérieur du compresseur basse pression 18, ce train d'engrenages épicycloïdal 32 étant alors qualifié de réducteur du fait de sa fonction de réduction de la vitesse de rotation.

Un tel train d'engrenages 32 comprend des pignons satellites 34 en prise avec un planétaire interne 36 ou pignon central et avec un planétaire externe 38 ou couronne extérieure, les planétaires interne 36 et externe 38 étant en coaxiaux à l'axe X de la turbomachine. Chaque pignon satellite 34 est monté libre en rotation autour d'un pivot 40 et les pivots 40 sont solidaires d'un porte-satellites 42. Dans un réducteur planétaire, le pignon central 36 est solidaire en rotation de l'arbre 30 du compresseur basse pression 18 qui forme une entrée d'un train d'engrenages, le porte satellites 42 est fixe et la couronne extérieure 38 est rendue solidaire de la roue de soufflante 12 et forme une sortie de réduction de la vitesse du train d'engrenages épicycloïdal. Le carter 44 de la turbomachine délimite extérieurement une enceinte annulaire 46 dans laquelle est montée le train d'engrenages.

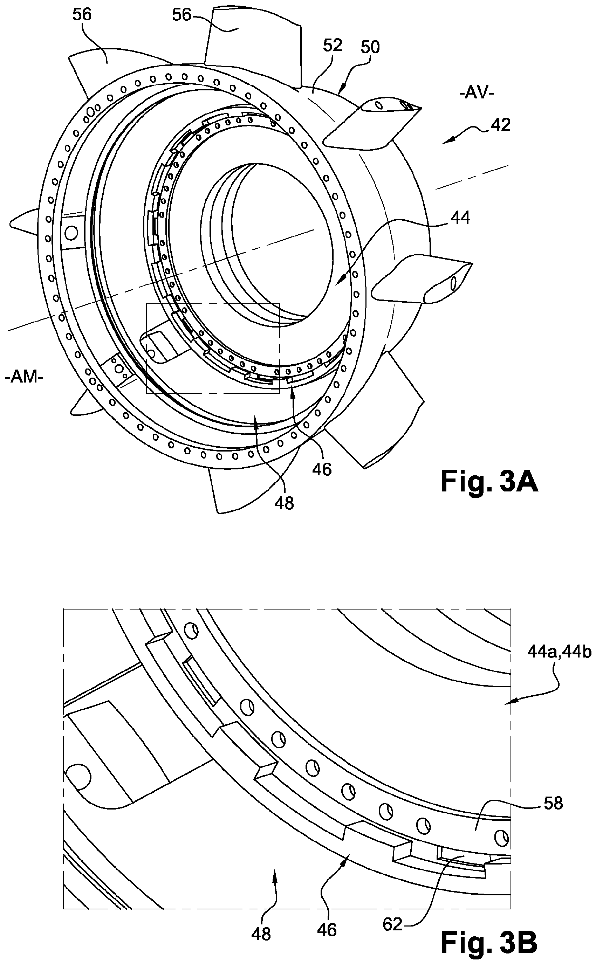

La figure 3A représente un assemblage 42 selon l'invention permettant de relier le planétaire externe 38 au stator de la turbomachine, plus particulièrement au carter. Cet assemblage 42 comprend une première pièce 44 annulaire, une seconde pièce 46 annulaire et une troisième pièce 48 annulaire. Comme cela est bien visible sur cette figure, l'assemblage 42 comprend un carter annulaire 50, qui est ici le carter intermédiaire séparant axialement le compresseur basse pression du compresseur haute pression. Le carter intermédiaire 50 comprend une virole annulaire 52 interne dont la face radialement externe délimite radialement vers l'intérieur la veine annulaire primaire d'écoulement du flux d'air primaire s'écoulant du compresseur basse pression vers le compresseur haute pression. Cette virole annulaire 52 porte des bras radiaux 56 dont les extrémités sont reliées à une virole annulaire externe 54 (non représentée).

Ainsi, dans cet assemblage 42, la première pièce annulaire 44, la seconde pièce annulaire 46 et la troisième pièce annulaire 48 sont engagées à l'intérieur de la virole annulaire 52 interne du carter 50. La seconde pièce 46 annulaire est intercalée radialement entre la première pièce 44 annulaire et la troisième pièce annulaire 48. La troisième pièce 48 annulaire est intercalée radialement entre la deuxième pièce 46 annulaire et la virole annulaire 52 interne du carter 50. Cet agencement ressort clairement de la figure 3 sur laquelle l'extrémité amont est indiquée par AM et l'extrémité aval est indiquée par AV.

Selon une réalisation, la première pièce annulaire 44 et la seconde pièce annulaire 46 sont chacune bloquées en rotation sur la virole annulaire 52 du carter intermédiaire 50 par l'intermédiaire de moyens de crabotage circonférentiel spécifiques, c'est-à-dire de premiers moyens de crabotage circonférentiel pour la liaison de la première pièce annulaire 44 au carter 50 et de seconds moyens de crabotage circonférentiel pour la liaison de la seconde pièce annulaire 46 au carter 50.

Selon l'invention :
- les premiers moyens de crabotage annulaire sont configurés pour autoriser un premier jeu circonférentiel entre la première pièce annulaire 44 et le carter 50,
- les seconds moyens de crabotage annulaire sont configurés pour autoriser un second jeu circonférentiel entre la seconde pièce annulaire 46 et le carter 50 ;
- le premier jeu circonférentiel est inférieur strictement au second jeu circonférentiel.

Lorsque le couple dépasse une certaine limite, la seconde pièce 46 annulaire permet de faire transiter les efforts, la première pièce 44 permettant de faire transiter les couples inférieurs. La seconde pièce 46 pourra ainsi être conçue et dimensionnée pour reprendre les couples supérieurs à cette valeur limite. Ce schéma spécifique pour le passage de couple est rendu possible par une liaison dédiée de chacune de la première pièce annulaire 44 et de la seconde pièce 46 annulaire au carter 50 et par le dimensionnement des jeux circonférentiels comme précité.

Pour faciliter le fonctionnement précité, la première pièce 44 annulaire présente une rigidité axiale et une rigidité circonférentielle inférieures, respectivement, à la rigidité axiale et la rigidité circonférentielle de la seconde pièce 46 annulaire. Cela apparaitra à la lumière de la description de la première pièce 44 annulaire et de la seconde pièce 46 annulaire.

Dans une réalisation de l'invention, le premier jeu circonférentiel peut être compris entre 0 et 0,2 mm et de préférence inférieur à 0,1 mm. Le second jeu circonférentiel peut être compris entre 0,5 et 2 mm.

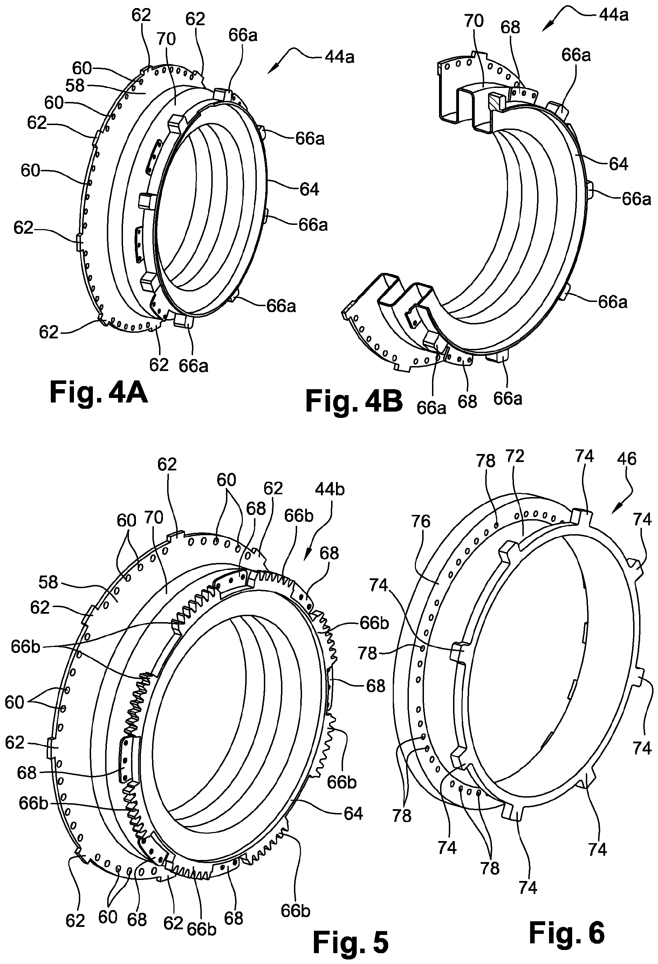

Les figures 4A et 4B représentent une première réalisation de la première pièce 44a annulaire et la figure 5 représentent une seconde réalisation de cette même pièce 44b.

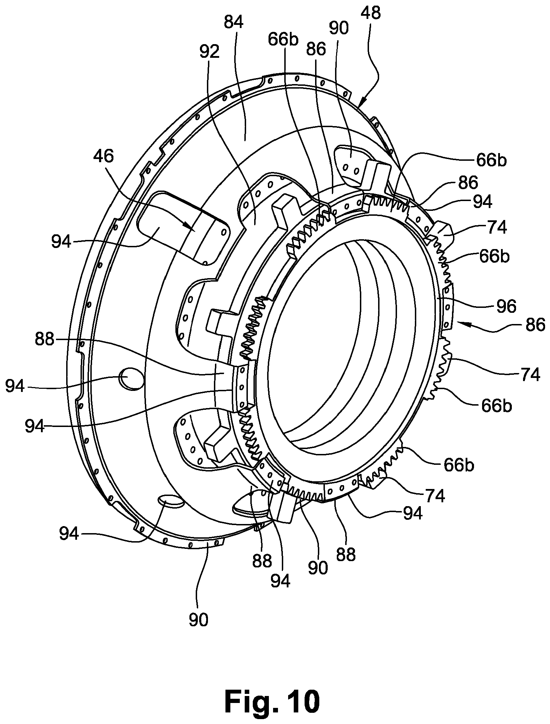

Dans la première réalisation de la première pièce annulaire 44a représentée aux figures 4A et 4B, celle-ci comprend une bride annulaire 58 radiale amont comportant des perçages 60 pour la fixation par boulonnage de la première pièce annulaire au train d'engrenages tel qu'un réducteur. Cette bride 58 comporte également une pluralité de saillies 62 radiales régulièrement réparties circonférentiellement atour de l'axe de la turbomachine. La première pièce 44a annulaire comprend également une paroi cylindrique 64 aval portant sur sa face radialement extérieure des dents 66a qui font partie des premiers moyens de crabotage, ces dents 66a étant régulièrement réparties circonférentiellement. La paroi cylindrique 64 aval comprend également des secteurs de brides radiales 68 agencées circonférentiellement entre certaines des dents de crabotage et comportant des orifices pour la fixation par boulonnage sur des secteurs de brides radiales 94 correspondantes de la troisième pièce 48 comme cela apparaitra ultérieurement en relation avec la figure 10.

La première pièce 44a annulaire comporte en outre un renflement annulaire 70 s'étendant radialement vers l'extérieur et ayant en section une forme rectangulaire. Ce renflement 70 permet de donner une souplesse radiale à la première pièce 44a limitant la transmission des vibrations et limitant le basculement de celle-ci.

Dans la seconde réalisation de la première pièce 44b représentée en figure 5, celle-ci diffère de la première réalisation en ce que les dents 66a de crabotage sont remplacées par des séries de nervures 66b qui sont espacées circonférentiellement les unes des autres. On observe que la seconde pièce 46 annulaire ne comprend pas de renflement annulaire puisque celle-ci doit permettre de reprendre des couples importants supérieurs, à une valeur seuil admissible par la première pièce annulaire 44a, 44b.

La seconde pièce 46 annulaire représentée en figure 6 comprend une paroi cylindrique 72 dont l'extrémité aval porte des dents 74 en saillie radialement vers l'extérieur et régulièrement réparties circonférentiellement. Ces dents 74 font ainsi partie des seconds moyens de crabotage. La seconde pièce 46 annulaire comprend un épaulement annulaire 76 comportant des perçages 78 coopérant avec les perçages 60 de la bride 58 annulaire radiale amont de la première pièce 44a, 44b pour leur fixation ensemble par boulonnage. Cet épaulement forme ainsi une bride annulaire de fixation avec la bride de la première pièce. De plus, la bride annulaire 58 radiale de la première pièce 44a, 44b annulaire est bloquée axialement sur l'épaulement annulaire 76 de la seconde pièce 46.

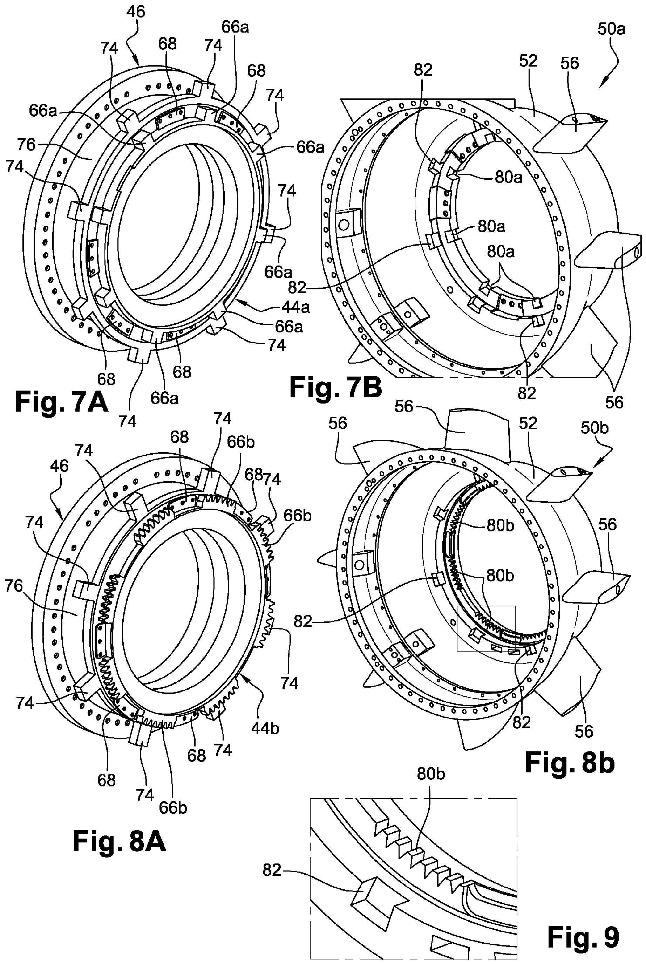

Selon l'invention, la première réalisation de la première pièce 44a représentée aux figures 4A et 4B est engagée dans la seconde pièce 46 représentée en figure 6 pour donner l'ensemble représenté en figure 7A. Cet ensemble est engagé dans le carter 50a représenté en figure 7B. Pour cela, les premiers moyens de crabotage comprennent des parties creuses 80a ou encoches formées sur le pourtour annulaire interne et aval de la virole 52 du carter 50a. Ces encoches 80a sont destinées à recevoir les dents 66a de crabotage de la première pièce 44a et ainsi bloquer la rotation de la première pièce 44A dans le carter 50a. Egalement, les seconds moyens de crabotage comprennent des évidements 82 à fond fermé formé sur le carter 50 et plat en direction aval de manière à former une butée axiale au montage des dents 74 de la seconde pièce 46 dans lesdits évidements 82. On comprend ainsi que la première pièce 44a est bloquée axialement sur la seconde pièce 46, laquelle est bloquée axialement sur le carter 50a.

La seconde réalisation de la première pièce 44b représentée à la figure 5 est engagée dans la seconde pièce 44b représentée en figure 6 pour donner l'ensemble représenter en figure 8A. Cet ensemble est engagé dans le carter 50b représenté en figure 8B. Les encoches 80a de la figure 7B sont ici remplacées par des cannelures 80b et coopèrent à engagement axial avec les nervures 66b de la première pièce 44b selon la deuxième réalisation.

La troisième pièce annulaire 48, représentée en figure 10 assemblée à la première pièce 44a selon la seconde réalisation, comprend une paroi tronconique 84 dont l'extrémité aval est reliée à deux séries de bras 86, 88, chaque série comprenant ici plus particulièrement trois bras. Les bras 86, 88 de chaque série sont séparés par des premiers évidements 90 et les séries sont séparées angulairement par des seconds évidements 92. Des ajours 94 sont formés dans la paroi tronconique 84 et permettent le passage de canalisations d'alimentation en huile du train d'engrenages. L'extrémité aval de chaque bras 86, 88 comprend une bride radiale 96 de fixation, par boulonnage par exemple, sur la face aval de la première pièce 44b, plus spécifiquement sur les brides radiales 68 de la première pièce 44b. Comme représenté, lorsque la troisième pièce 48 est montée autour de la seconde pièce 46, les bras radiaux 90 s'étendent entre les dents 74 de crabotage des seconds moyens de crabotage circonférentiel de la seconde pièce 46. On comprend que le principe de montage et de fixation de la troisième pièce 48 peut être réalisé de manière identique avec la première pièce 44a de la première réalisation bien que cela ne soit pas représenté.

De manière plus générale, il est préférable que la troisième pièce 48 soit fixée à la première pièce 44a, 44b et non à la seconde pièce 46 afin de maintenir une bonne rigidité à l'assemblage formé de la première pièce 44a, 44b, de la seconde pièce 46 et de la troisième pièce 48 du fait que le premier jeu circonférentiel est inférieur strictement au second jeu circonférentiel. Egalement, on observe sur les figures que la première pièce 44a, 44b est bloquée ou arrêtée axialement sur la seconde pièce 46 laquelle est elle-même maintenue axialement en position fixe dans le carter 50, ce qui permet de maintenir un bon positionnement axial de la première pièce 44a, 44b relativement à la seconde pièce 46 et de ceux deux pièces dans le carter 50. Ce blocage peut, bien évidemment, être obtenu par d'autres moyens que la bride annulaire 58 et l'épaulement 76 et le fond fermé des évidements 82 du carter 50.

## Revendications

1. Assemblage destiné au maintien (42) d'un train d'engrenages épicycloïdal dans une turbomachine, l'assemblage comprenant un carter annulaire (50) dans lequel sont engagées une première pièce annulaire (44) et une seconde pièce annulaire (46) bloquées en rotation dans le carter (50), respectivement, par des premiers moyens de crabotage annulaire et des seconds moyens de crabotage annulaire dans lequel :
- les premiers moyens de crabotage annulaire sont configurés pour autoriser un premier jeu circonférentiel entre la première pièce (44) annulaire et le carter (50) ;
- les seconds moyens de crabotage annulaire sont configurés pour autoriser un second jeu circonférentiel entre la seconde pièce annulaire (48) et le carter (50) ;
- le premier jeu circonférentiel est inférieur strictement au second jeu circonférentiel.

2. Assemblage selon la revendication 1, dans lequel la première pièce (44) annulaire présente une rigidité axiale et une rigidité circonférentielle inférieures, respectivement, à la rigidité axiale et la rigidité circonférentielle de la seconde pièce (46) annulaire.

3. Assemblage selon la revendication 1 ou 2, dans lequel la première pièce (44) comprend au moins un renflement annulaire (70) formé axialement entre les premiers moyens de crabotage et une bride annulaire opposée de fixation à un planétaire externe d'un train d'engrenages épicycloïdal.

4. Assemblage selon l'une des revendications 1 à 3, dans lequel la première pièce (44) annulaire et la seconde pièce annulaire (46) sont fixées l'une à l'autre par des brides annulaires (58, 78) axialement opposées aux premiers moyens de crabotage et aux seconds moyens de crabotage.

5. Assemblage selon l'une des revendications 1 à 4, dans lequel le premier jeu circonférentiel est compris entre 0 et 0,2 mm, de préférence inférieur à 0,1 mm, et/ou dans lequel le second jeu est compris entre 0,5 et 2 mm.

6. Assemblage selon l'une des revendications 1 à 5, dans lequel les premiers moyens de crabotage circonférentiel comprennent :
- une pluralité de séries de cannelures (80b) axiales, lesdites séries étant espacées circonférentiellement et formées sur l'un de la première pièce (44b) et du carter (50b), et
- une pluralité de séries de nervures (66b) axiales, lesdites séries étant espacées circonférentiellement et formées sur l'autre de la première pièce (44b) et du carter (50b).

7. Assemblage selon l'une des revendications 1 à 6, dans lequel la seconde pièce (46) annulaire est intercalée radialement entre la première pièce (44) annulaire et une virole annulaire (52) du carter (50).

8. Assemblage selon l'une des revendications 1 à 7, dans lequel il comprend une troisième pièce (48) annulaire intercalée annulairement entre la seconde pièce (46) annulaire et le carter (50) et comportant des bras (90) axiaux fixés par boulonnage sur la première pièce (44a) annulaire.

9. Assemblage pour turbomachine comprenant un assemblage selon l'une des revendications précédentes et un train d'engrenages,
ledit train d'engrenages comportant un planétaire externe (38) et des pignons satellites en prise avec un planétaire interne (36) et avec le planétaire externe (38) et montés chacun libre en rotation sur un porte-satellites (42).

10. Turbomachine à gaz pour aéronef comprenant un assemblage selon la revendication 9 dont le planétaire interne (36) entoure et est solidaire en rotation d'un arbre (30) du compresseur de la turbomachine.

## Patentansprüche

1. Anordnung zur Halterung (42) eines Planetengetriebezugs in einem Turbotriebwerk, wobei die Anordnung ein ringförmiges Gehäuse (50) umfasst, in das ein erstes ringförmiges Teil (44) und ein zweites ringförmiges Teil (46) eingreifen, die jeweils durch erste ringförmige Formschlussmittel bzw. zweite ringförmige Formschlussmittel drehfest in dem Gehäuse (50) gesichert sind, wobei:
- die ersten ringförmigen Formschlussmittel dazu ausgelegt sind, ein erstes Umfangsspiel zwischen dem ersten ringförmigen Teil (44) und dem Gehäuse (50) zuzulassen;
- die zweiten ringförmigen Formschlussmittel dazu ausgelegt sind, ein zweites Umfangsspiel zwischen dem zweiten ringförmigen Teil (48) und dem Gehäuse (50) zuzulassen;
- das erste Umfangsspiel strikt kleiner als das zweite Umfangsspiel ist.

2. Anordnung nach Anspruch 1,
wobei das erste ringförmige Teil (44) eine axiale Steifigkeit und eine Umfangssteifigkeit aufweist, die jeweils geringer sind als die axiale Steifigkeit und die Umfangssteifigkeit des zweiten ringförmigen Teils (46).

3. Anordnung nach Anspruch 1 oder 2,
wobei das erste Teil (44) zumindest eine ringförmige Ausbuchtung (70) aufweist, die axial zwischen den ersten Formschlussmitteln und einem gegenüberliegenden, ringförmigen Flansch zur Befestigung an einem äußeren Sonnenrad eines Planetengetriebezugs ausgebildet ist.

4. Anordnung nach einem der Ansprüche 1 bis 3,
wobei das erste ringförmige Teil (44) und das zweite ringförmige Teil (46) durch ringförmige Flansche (58, 78) aneinander befestigt sind, die den ersten Formschlussmitteln und den zweiten Formschlussmitteln axial gegenüberliegen.

5. Anordnung nach einem der Ansprüche 1 bis 4,
wobei das erste Umfangsspiel zwischen 0 und 0,2 mm, vorzugsweise weniger als 0,1 mm, beträgt und/oder wobei das zweite Spiel zwischen 0,5 und 2 mm beträgt.

6. Anordnung nach einem der Ansprüche 1 bis 5,
wobei die ersten Formschlussmittel enthalten:
- eine Vielzahl von Reihen von axialen Rillen (80b), wobei die Reihen in Umfangsrichtung beabstandet sind und an einem aus erstem Teil (44b) und Gehäuse (50b) ausgebildet sind, und
- eine Vielzahl von Reihen von axialen Rippen (66b), wobei die Reihen in Umfangsrichtung beabstandet sind und an dem anderen aus erstem Teil (44b) und Gehäuse (50b) ausgebildet sind.

7. Anordnung nach einem der Ansprüche 1 bis 6,
wobei das zweite ringförmige Teil (46) radial zwischen dem ersten ringförmigen Teil (44) und einem Mantelring (52) des Gehäuses (50) eingefügt ist.

8. Anordnung nach einem der Ansprüche 1 bis 7,
wobei sie ein drittes ringförmiges Teil (48) umfasst, das ringförmig zwischen dem zweiten ringförmigen Teil (46) und dem Gehäuse (50) eingefügt ist und axiale Arme (90) aufweist, die durch Verschraubung an dem ersten ringförmigen Teil (44a) befestigt sind.

9. Anordnung für ein Turbotriebwerk mit einer Anordnung nach einem der vorhergehenden Ansprüche und einem Getriebezug, wobei der Getriebezug ein äußeres Sonnenrad (38) und Planetenräder umfasst, die mit einem inneren Sonnenrad (36) und mit dem äußeren Sonnenrad (38) in Eingriff stehen und jeweils frei drehbar an einem Planetenträger (42) gelagert sind.

10. Gasturbotriebwerk für ein Luftfahrzeug mit einer Anordnung nach Anspruch 9, deren inneres Sonnenrad (36) eine Welle (30) des Verdichters des Turbotriebwerks umgibt und drehfest mit ihr verbunden ist.

## Claims

1. Assembly for holding (42) an epicyclic gear train in a turbomachine, the assembly comprising an annular housing (50) in which are engaged a first annular part (44) and a second annular part (46) which are locked against rotation in the housing (50) by first annular interlocking means and second annular interlocking means respectively, wherein:
- the first annular interlocking means are configured to allow a first circumferential clearance between the first annular part (44) and the housing (50);
- the second annular interlocking means are configured to allow a second circumferential clearance between the second annular part (48) and the housing (50);
- the first circumferential clearance is strictly less than the second circumferential clearance.

2. Assembly according to claim 1, wherein the first annular part (44) has an axial rigidity and a circumferential rigidity lower, respectively, than the axial rigidity and the circumferential rigidity of the second annular part (46).

3. Assembly according to claim 1 or 2, wherein the first part (44) comprises at least one annular bulge (70) formed axially between the first engaging means and an opposing annular flange for attachment to an outer sun gear of an epicyclic gear train.

4. Assembly according to any one of claims 1 to 3, wherein the first annular part (44) and the second annular part (46) are fixed to each other by annular flanges (58, 78) axially opposite to the first interlocking means and the second interlocking means.

5. Assembly according to one of claims 1 to 4, wherein the first circumferential clearance is between 0 and 0.2 mm, preferably less than 0.1 mm, and/or wherein the second clearance is between 0.5 and 2 mm.

6. Assembly according to one of claims 1 to 5, wherein the first circumferential interlocking means comprise:
- a plurality of series of axial ribs (80b), said series being circumferentially spaced and formed on one of the first part (44b) and the housing (50b), and
- a plurality of series of axial ribs (66b), said series being circumferentially spaced and formed on one of the first part (44b) and the housing (50b).

7. Assembly according to one of claims 1 to 6, wherein the second annular part (46) is radially interposed between the first annular part (44) and an annular shell (52) of the housing (50).

8. Assembly according to one of claims 1 to 7, in which it comprises a third annular part (48) interposed annularly between the second annular part (46) and the housing (50) and comprising axial arms (90) fixed by bolting to the first annular part (44a).

9. Assembly for a gas turbomachine comprising an assembly according to one of the preceding claims and a gear train, said gear train including an outer sun gear (38) and planet gears meshing with an inner sun gear (36) and with the outer sun gear (38) and each rotatably mounted on a planet carrier (42).

10. A gas turbomachine for aircraft comprising an assembly train according to claim 9, the inner sun gear (36) of which surrounds and is rotationally integral with a shaft (30) of the compressor of the turbomachine.
